# EUROPEAN PATENT SPECIFICATION

(11) **EP 4 039 689 B1**
(45) Date of publication and mention of the grant of the patent: **08.10.2025**
(21) Application number: 21870484.9
(22) Date of filing: 27.05.2021
(51) Int. Cl.: C07F 9/12

(54) **CONTINUOUS INDUSTRIAL PRODUCTION METHOD FOR HIGH-PURITY BISPHENOL A-BIS(DIPHENYL PHOSPHATE)**
KONTINUIERLICHES INDUSTRIELLES HERSTELLUNGSVERFAHREN VON HOCHREINEM BISPHENOL-A-BIS(DIPHENYLPHOSPHAT)
PROCÉDÉ DE PRODUCTION INDUSTRIELLE CONTINUE DE BISPHÉNOL A-BIS(PHOSPHATE DE DIPHÉNYLE) TRÈS PUR

(30) Priority: 07.12.2020 CN 202011416318
(43) Date of publication of application: 10.08.2022
(73) Proprietor: Zhejiang Wansheng Co., Ltd, Taizhou, Zhejiang 317000 (CN)
(72) Inventor: LI, Xufeng, Taizhou, Zhejiang 317000 (CN); LV, Yunxing, Taizhou, Zhejiang 317000 (CN); WANG, Qiuwei, Taizhou, Zhejiang 317000 (CN); WU, Xianshui, Taizhou, Zhejiang 317000 (CN)
(74) Representative: karo IP
(86) International application number: PCT/CN2021/096202
(87) International publication number: WO 2022/121245

(56) References cited:
- CN-A- 1 512 997
- CN-A- 105 037 418
- CN-A- 105 061 499
- CN-A- 106 496 264
- CN-A- 106 496 264
- CN-A- 110 317 228
- CN-A- 112 409 404
- CN-B- 105 037 418
- CN-B- 106 496 264

## Description

### FIELD OF TECHNOLOGY

The present invention belongs to the technical field of chemical synthesis, and more particularly relates to a continuous industrial production method of high-purity bisphenol A-bis(diphenyl phosphate).

### BACKGROUND

Bisphenol A-bis(diphenyl phosphate) (BDP for short) has a molecular formula of C₃₉H₃₄O₈P₂, a molecular weight of 692, and a structural formula as follows:

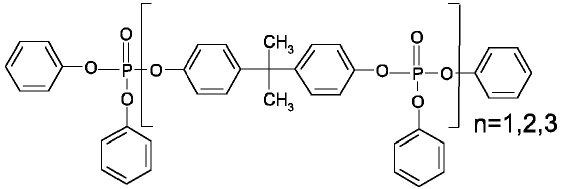

The bisphenol A-bis(diphenyl phosphate) is an oligomeric non-halogen flame retardant, is a good plasticizer at the same time, and is mainly applied to thermoplastic engineering plastics such as epoxy resin and epoxy resin polymers for PC, ABS, PC/ABS and PPO/HIPS hard circuit boards, and has flame retardant performance greatly superior to that of traditional flame retardants such as alkyl phenyl phosphate. In recent years, new energy automobiles have been widely popularized, and the demand on bisphenol A-bis(diphenyl phosphate) has been remarkably increased, and the supply falls short of demand in the market.

At present, the preparation method of a bisphenol A-bis(diphenyl phosphate) flame retardant is mainly a method of Chinese patent CN101456879A (application No. 200710179279.4, entitled preparation method of flame retardant of bisphenol A-bis(diphenyl phosphate)). In the method, phosphorus oxychloride is used to react with bisphenol A, after the reaction, phosphorus oxychloride is obtained through reduced pressure distillation, and then, end-capping treatment is performed by phenol to obtain bisphenol A-bis(diphenyl phosphate). CN 106 496 264 B discloses a method for the continuous preparation of Bisphenol A.

For example, each of Chinese patent CN101348500A, Chinese patent CN1414968A, Chinese patent CN1367788A and the like discloses a production method of bisphenol A-bis(diphenyl phosphate). A production process is as follows: firstly enabling bisphenol A to react with excessive phosphorus oxychloride under the participation of Lewis catalyst, then removing excessive phosphorus oxychloride through high-vacuum reduced pressure distillation, next preparing a BDP crude product through reaction with phenol, further performing acid washing, alkali washing and water washing on the BDP crude product under the existence of a solvent, removing the solvent and water through distillation, and performing filtration to obtain the BDP product. Generally, the industrial method produced BDP obtained by this method generally contains about 1% to 3% of triphenyl phosphate (TPP) and about 1% of isopropylbenzene diphenyl ester, both the triphenyl phosphate and the isopropylbenzene diphenyl ester are harmful substances, the isopropyl has an instable phenomenon, due to the existence of the isopropenyl, the color becomes dark when the product is irradiated by light, due to the existence of TPP, mold product defects, pollution and mold corrosion may be caused, problems of volatilization, seepage and the like may easily occur after the TPP enters the materials, and the flame retardant performance and other physical performance of the product are influenced.

Most existing production methods of bisphenol A-bis(diphenyl phosphate) mainly use an intermittent synthesis reaction, the intermittent reaction has defects of long time period, need of a great number of workers, serious bubbling and drip leakage phenomenon in a chemical plant, poor operation environment of workers, and harm to human body health, sometimes, life danger may occur, the energy consumption is high, and additionally, the production yield is low. Additionally, due to the existence of air and water vapor in the surroundings, the influence on the reaction process and result of the intermittent process is very great, the prepared BDP product contains much TPP, the TPP has certain toxicity on aquatic creature, and the TPP content of the product is strictly controlled on the international market.

Therefore, it is of great important significance to provide a high-purity continuous bisphenol A-bis(diphenyl phosphate) preparation method.

### SUMMARY

In order to solve the above problems in the prior art, the objective of the present invention is to provide a continuous industrial production method of high-purity bisphenol A-bis(diphenyl phosphate).

The continuous industrial production method of high-purity bisphenol A-bis(diphenyl phosphate) is characterized by including the following processes:
1) dividing bisphenol A into two parts, firstly premixing a part of the bisphenol A with phosphorus oxychloride and a Lewis acid catalyst to form a reaction liquid; adding the reaction liquid into a continuous multistage crosslinked reactor in a continuous feeding manner, and taking a reaction by controlling a reaction temperature at 80°C to 120°C and a reaction pressure at -0.015 to -0.02 MPa; after the reaction is completed, removing excessive phosphorus oxychloride by using a film evaporator through reduced pressure distillation, adding an organic base acid binding agent and the rest of the bisphenol A into a distillation remaining liquid, and taking a reaction for 1.5 to 3 h at a temperature of 115°C to 120°C to obtain an intermediate product reaction liquid; wherein a first part of the bisphenol A firstly participating in the reaction accounts for 70% to 80% of the total amount of the bisphenol A, and the rest of the bisphenol A finally participating in the reaction accounts for 30% to 20% of the total amount of bisphenol A; and wherein a ratio of a weight of the added phosphorus oxychloride to a total weight of the two parts of the added bisphenol A is 2.5-3.5:1.
2) premixing the intermediate product reaction liquid obtained in the step 1) with a phenol initial raw material, then, adding the mixture into a multistage esterification reactor in a continuous feeding manner, and taking an esterification reaction by controlling a reaction temperature at 90 to 150°C and a reaction pressure at -0.015 to 0.02 MPa; continuously supplying consumed phenol in the multistage esterification reaction process so that a reaction progress is accelerated, obtaining a bisphenol A-bis(diphenyl phosphate) crude product after the reaction is completed, and dissolving the crude product into an organic solvent to form a crude product solution; and
3) sequentially performing continuous acid washing, continuous alkali washing and continuous water washing on the crude product solution obtained in the step 2), and performing continuous solvent recovery and filtration to obtain a bisphenol A-bis(diphenyl phosphate) finished product.

The continuous industrial production method of high-purity bisphenol A-bis(diphenyl phosphate) is characterized in that in the step 1), the Lewis acid catalyst is at least one of anhydrous magnesium chloride, anhydrous aluminum chloride, zinc chloride and titanium tetrachloride, and is preferably anhydrous magnesium chloride; and a weight of the added Lewis acid catalyst is 0.1% to 2% of a total weight of two parts of the bisphenol A.

The continuous industrial production method of high-purity bisphenol A-bis(diphenyl phosphate) is characterized in that in the step 1), the organic base acid binding agent is organic amine, and a ratio of a weight of the added organic base acid binding agent to the total weight of the two parts of the added bisphenol A is 1:7-8.

The continuous industrial production method of high-purity bisphenol A-bis(diphenyl phosphate) is characterized in that the organic amine is triethylamine, ammonia gas or N-methylmorpholine, and is preferably triethylamine.

The continuous industrial production method of high-purity bisphenol A-bis(diphenyl phosphate) is characterized in that in the step 1), the continuous multistage crosslinked reactor includes four stages of reactors, a reaction temperature of a first-stage reactor is 80°C to 85°C, a reaction temperature of a second-stage reactor is 90°C to 100°C, a reaction temperature of a third-stage reactor is 100°C to 110°C, a reaction temperature of a fourth-stage reactor is 110°C to 120°C, and a dwell time of materials in each reactor is 2 to 2.5 h.

The continuous industrial production method of high-purity bisphenol A-bis(diphenyl phosphate) is characterized in that in the step 2), the multistage esterification reactor includes four stages of reactors connected in series, a reaction temperature of a first-stage reactor is 90°C to 105°C, a reaction temperature of a second-stage reactor is 110°C to 115°C, a reaction temperature of a third-stage reactor is 130°C to 135°C, a reaction temperature of a fourth-stage reactor is 140°C to 145°C, and a dwell time of materials in each reactor is 1.5 to 2 h.

The continuous industrial production method of high-purity bisphenol A-bis(diphenyl phosphate) is characterized in that in the step 2), the multistage esterification reactor includes four stages of reactors connected in series, consumed phenol is additionally supplied into a second-stage reactor, a third-stage reactor and a fourth-stage reactor, and an amount of the phenol supplied to each stage is 1% to 5% of a weight of the phenol initial raw material.

The continuous industrial production method of high-purity bisphenol A-bis(diphenyl phosphate) is characterized in that a ratio of a total weight of the two parts of the bisphenol A in the step 1) to a weight of the phenol initial raw material in the step 2) is 2-2.5:1.

By adopting the above technologies, compared with the prior art, the present invention has the following beneficial effects:
1) According to the present invention, firstly, a part of bisphenol A is used for reaction, a state of the bisphenol A in the reaction process is solid, and if a great amount of bisphenol A is added in one step in the reaction process, a great amount of bisphenol A solid may exist in the phosphorus oxychloride, resulting in slow reaction of the bisphenol A, so that under the conditions of higher temperature and long dwell time, and the bisphenol easily takes a decomposition side reaction at this moment to obtain allyl phenol and phenol through decomposition. The allyl phenol and the phenol can easily react with the phosphorus oxychloride, the allyl phenol easily reacts with the phosphorus oxychloride to generate an impurity of isopropylphenyl diphenyl phosphate, the phenol is easy to react with the phosphorus oxychloride to generate an impurity of triphenyl phosphate, the isopropylphenyl diphenyl phosphate and the triphenyl phosphate are harmful, and their contents are required to be strictly controlled in a product production process.
   In the production process of the present invention, the bisphenol A is divided into two parts to be added, after the reaction of the first stage is completed, the excessive phosphorus oxychloride is removed, the produced intermediate product contains a plurality of acyl chloride groups, hydroxyl groups in the rest of the bisphenol further take a crosslinked reaction, in the crosslinked reaction, organic base is added to release hydrogen chloride gas in the neutralization reaction process, so that the reaction is performed in a positive direction, the reaction progress is accelerated, and the objectives of shortening the reaction time and reducing impurities are achieved.
2) In the multistage esterification reaction process, a great amount of hydrogen chloride gas is released in the esterification reaction process, the hydrogen chloride gas is removed through negative pressure operation, the phenol can be easily brought out in the removal process through reaction, and the reaction is enabled to be performed in the positive direction by a method of continuously introducing and supplying phenol into each reactor in the reaction process, so that the esterification reaction is complete, and low yield is avoided.
3) The production process of the present invention lowers the production cost, greatly reduces the work intensity of operators, and improves the work efficiency. Additionally, the product yield is greatly improved, so that the batch production quality is stable, and the safe and environmental-friendly production is reached. A product yield is improved to 97% or higher, a product color number is improved to 50 or below, the TPP is controlled at 0.1%, an index of isopropyl phenyl diphenyl phosphate is smaller than 50 ppm, and each product quality index fluctuation is small.

### DESCRIPTION OF THE EMBODIMENTS

The present invention will be further illustrated hereafter in combination with specific embodiments, but the protection scope of the present invention is not limited thereto.

### Embodiment 1:

A continuous industrial production method of high-purity bisphenol A-bis(diphenyl phosphate) specifically included the following steps:

### 1. Multistage crosslinked reaction:

Phosphorus oxychloride (4500 Kg/h), magnesium chloride (20 Kg/h) and bisphenol A (1200 Kg/h) were proportionally and continuously added into a premixing kettle, and were premixed in the premixing kettle in a heated manner, then, a reaction liquid in the premixing kettle flew into a fourth-stage reactor from a first-stage reactor in a continuous feeding manner, a reaction temperature of the first-stage reactor was 80°C to 85°C, a reaction temperature of a second-stage reactor was 90°C to 100°C, a reaction temperature of a third-stage reactor was 100°C to 110 °C, a reaction temperature of the fourth-stage reactor was 110°C to 120°C, a dwell time of materials in each reactor was 2 h, and a reaction pressure was respectively controlled at -0.015 mpa to -0.02 mpa.

For the reaction liquid flowing out from the fourth-stage reactor, excessive phosphorus oxychloride was removed by using a film evaporator through reduced pressure distillation, a vacuum degree was 50 pa, a distillation temperature was 120°C to 130°C, and a distillation remaining liquid was continuously supplied into a fifth-stage reactor at a flow rate of 2500 kg/h. At the same time, bisphenol A (300 Kg/h) and triethylamine (220 Kg/h) were input into the fifth-stage reactor for esterification reaction, a reaction temperature of the fifth-stage reactor was 115°C to 120°C, a material dwell time was 2 h, and an intermediate product reaction liquid was obtained after the reaction was completed.

### 2. Multistage esterification reaction:

The intermediate product reaction liquid obtained in the step 1 was added into a static mixer at a flow rate of 3000 kg/h. At the same time, the phenol was added into the static mixer at a flow rate of 2100 kg/h to be mixed. The obtained mixed liquid flew to the fourth-stage reactor from the first-stage reactor in a continuous feeding manner, a reaction temperature of the first-stage reactor was 100°C to 105°C, a reaction temperature of a second-stage reactor was 120°C to 130°C, phenol at a flow rate of 100 kg/h was introduced and supplied at the same time of the second-stage reaction, a reaction temperature of the third-stage reactor was 130°C to 135°C, phenol at a flow rate of 100 kg/h was introduced and supplied at the same time of the third-stage reaction, a reaction temperature of the fourth-stage reactor was 140°C to 145°C, phenol at a flow rate of 100 kg/h was introduced and supplied at the same time of the fourth-stage reaction, a dwell time of materials of each reactor was 2 h, each reaction pressure was controlled to be -0.015 mpa to -0.02 mpa, and a crude product was finally obtained. The obtained crude product was dissolved into toluene at a mass ratio of 1:1 to form a crude product solution.

### 3. Crude product refining

The crude product solution (4800 Kg/h) and 10% hydrochloric acid (800 Kg/h) were introduced into an acid washing tower, and a circulating pump was started for forced circulation. After materials rise to a half of the volume of an acid washing tank, an acid washing feeding pump was started, at the same time, a mixed solvent (8000 Kg/h) was introduced for extraction in a washing tower, a mixed liquid enters an acid washing layering tower for layering, and a temperature was controlled at 60°C to 70°C in an acid washing process.

After the acid washing was completed, an organic layer (12800 Kg/h) obtained after acid washing layering and a 5% alkali liquid (2000 Kg/h) were introduced into an alkali washing tower for alkali washing, the mixed liquid entered an alkali washing layering tower for layering, and a temperature was controlled to be 60°C to 70°C in the alkali washing process.

After the alkali washing was completed, the organic layer (12800 Kg/h) obtained after the alkali washing layering and process water (1500 Kg/h) were introduced into a water washing tower for water washing, the mixed liquid entered a water washing layering tower for layering, and a temperature was controlled to be 60°C to 70°C in the water washing process.

For the crude product after water washing, a residual solvent was removed through film distillation, a film distillation temperature was 120°C to 130°C, a vacuum degree was 40 to 70 pa, 4319 kg of a bisphenol A-bis(diphenyl phosphate) finished product was obtained, and a product yield was 98%.

### Comparative example 1:

A continuous industrial production method of high-purity bisphenol A-bis(diphenyl phosphate) had the same experiment steps as Embodiment 1. The difference was only that in Comparative example 1, in the multistage crosslinked reaction work procedure in step 1, the bisphenol A was added in one step, and no triethylamine was added, and the rest steps were identical to those of Embodiment 1.

Specifically, a process of the multistage crosslinked reaction work procedure in Comparative example 1 was as follows:

### 1. Multistage crosslinked reaction:

Phosphorus oxychloride (4500 Kg/h), magnesium chloride (20 Kg/h) and bisphenol A (1500 Kg/h) were proportionally and continuously added into a premixing kettle, and were premixed in the premixing kettle in a heated manner, then, a reaction liquid in the premixing kettle flew into a fourth-stage reactor from a first-stage reactor in a continuous feeding manner, a reaction temperature of the first-stage reactor was 80°C to 85°C, a reaction temperature of a second-stage reactor was 90°C to 100°C, a reaction temperature of a third-stage reactor was 100°C to 110 °C, a reaction temperature of the fourth-stage reactor was 110°C to 120°C, a dwell time of materials in each reactor was 2 h, and a reaction pressure was respectively controlled at -0.015 mpa to -0.02 mpa.

For the reaction liquid flowing out from the fourth-stage reactor, excessive phosphorus oxychloride was removed by using a film evaporator through reduced pressure distillation, a vacuum degree was 50 pa, a distillation temperature was 120°C to 130°C, and an intermediate product reaction liquid obtained after the complete reaction took a multistage esterification reaction for a next step.

### Comparative example 2:

A continuous industrial production method of high-purity bisphenol A-bis(diphenyl phosphate) had the same experiment steps as Embodiment 1. The difference was only that in Comparative example 2, in the multistage crosslinked reaction work procedure in step 1, the bisphenol A was added in two times, and no triethylamine was added, and the rest steps were identical to those of Embodiment 1.

Specifically, a process of the multistage crosslinked reaction work procedure in Comparative example 2 was as follows:

### 1. Multistage crosslinked reaction:

Phosphorus oxychloride (4500 Kg/h), magnesium chloride (20 Kg/h) and bisphenol A (1200 Kg/h) were proportionally and continuously added into a premixing kettle, and were premixed in the premixing kettle in a heated manner, then, a reaction liquid in the premixing kettle flew into a fourth-stage reactor from a first-stage reactor in a continuous feeding manner, a reaction temperature of the first-stage reactor was 80°C to 85°C, a reaction temperature of a second-stage reactor was 90°C to 100°C, a reaction temperature of a third-stage reactor was 100°C to 110 °C, a reaction temperature of the fourth-stage reactor was 110°C to 120°C, a dwell time of materials in each reactor was 2 h, and a reaction pressure was respectively controlled at -0.015 mpa to -0.02 mpa.

For the reaction liquid flowing out from the fourth-stage reactor, excessive phosphorus oxychloride was removed by using a film evaporator through reduced pressure distillation, a vacuum degree was 50 pa, a distillation temperature was 120°C to 130°C, and a distillation remaining liquid was continuously supplied into a fifth-stage reactor at a flow rate of 2500 kg/h. At the same time, bisphenol A (500 Kg/h) was input into the fifth-stage reactor for esterification reaction, a reaction temperature of the fifth-stage reactor was 115°C to 120°C, a material dwell time was 2 h, and an intermediate product reaction liquid obtained after the reaction was completed took a multistage esterification reaction for a next step.

### Comparative example 3:

A continuous industrial production method of high-purity bisphenol A-bis(diphenyl phosphate) had the same experiment steps as Embodiment 1. The difference was only that in Comparative example 3, in the multistage crosslinked reaction work procedure in step 1, the bisphenol A was added in one step, and triethylamine was added, and the rest steps were identical to those of Embodiment 1.

Specifically, a process of the multistage crosslinked reaction work procedure in Comparative example 3 was as follows:

### 1. Multistage crosslinked reaction:

Phosphorus oxychloride (4500 Kg/h), magnesium chloride (20 Kg/h) and bisphenol A (1500 Kg/h) were proportionally and continuously added into a premixing kettle, and were premixed in the premixing kettle in a heated manner, then, a reaction liquid in the premixing kettle flew into a fourth-stage reactor from a first-stage reactor in a continuous feeding manner, a reaction temperature of the first-stage reactor was 80°C to 85°C, a reaction temperature of a second-stage reactor was 90°C to 100°C, a reaction temperature of a third-stage reactor was 100°C to 110 °C, a reaction temperature of the fourth-stage reactor was 110°C to 120°C, a dwell time of materials in each reactor was 2 h, and a reaction pressure was respectively controlled at -0.015 mpa to -0.02 mpa.

For the reaction liquid flowing out from the fourth-stage reactor, excessive phosphorus oxychloride was removed by using a film evaporator through reduced pressure distillation, a vacuum degree was 50 pa, a distillation temperature was 120°C to 130°C, and a distillation remaining liquid was continuously supplied into a fifth-stage reactor at a flow rate of 2800kg/h. At the same time, triethylamine (220 Kg/h) was input into the fifth-stage reactor for esterification reaction, a reaction temperature of the fifth-stage reactor was 115°C to 120°C, a material dwell time was 2 h, and an intermediate product reaction liquid was obtained after the reaction was completed.

### Embodiment 2:

Embodiment 2 was basically identical to Embodiment 1, the amount of phosphorus oxychloride was changed into 5500 Kg/h, and other reaction conditions were unchanged.

### Embodiment 3:

Embodiment 3 was basically identical to Embodiment 1, the adding proportions of the bisphenol A in two times were changed, the amount of the added bisphenol A in the first time was changed into 70% of the total amount (that is, a flow rate of the bisphenol A firstly participating in the reaction was 1050 kg/h), the rest 30% of the bisphenol A was added in the second time (that is, a flow rate of the rest of the bisphenol A participating in the reaction in the later stage was 450 kg/h), other reaction conditions were unchanged, and the experiment was performed.

### Embodiment 4: Experiment performed by traditional method

1. 4500 kg of phosphorus oxychloride and 20 kg of magnesium chloride were sequentially added into a glass-lined reaction kettle. Stirring was performed, and the temperature was slowly raised. When the temperature was raised to 90°C to 100°C, 1500 kg of bisphenol A was started to be added, and the adding time was 4 h. After the bisphenol A was added, the temperature was raised to 115 to 120°C, and was then preserved for 8 h. After the temperature preservation was completed, the reactor was changed to remove phosphorus oxychloride. A vacuum pump was started, the phosphorus oxychloride was removed through distillation. Most phosphorus oxychloride was firstly removed at a low temperature, then, the vacuum was adjusted to -0.98 mpa, the temperature was continuously raised to 130 to 140°C and was preserved until no phosphorus oxychloride was distilled, the distillation time was totally about 5 to 8 h, and an intermediate product was obtained.
2. The above intermediate product was transferred into a reaction kettle, the temperature was raised to 110°C to 120°C, 2400 kg of phenol was added dropwise, and the adding time was about 4 h. After the dropwise addition was completed, the temperature was raised to 140° to 150°C, the heat preservation was performed for 4 h, sampling and analysis were performed, and a crude product was obtained.
3. The crude product was completely transferred into a washing kettle, a solvent was added, the temperature was raised to 65 to 70°C, then, 800 kg of quantity fixing water was slowly added, 1000 kg of 30% hydrochloric acid was added, the temperature was raised to 65°C to 70°C, stirring was performed for 1 h, and still standing was performed for half an hour to separate out a water layer. Then, 1000 kg of water was added, 400 kg of 30% sodium hydroxide was added, the temperature was raised to 65°C to 70°C, stirring was performed for 1 h, and l standing was performed for half an hour to separate a water layer. 1500 kg of water was slowly added into a material layer, the temperature was raised to 65°C to 70°C, and was preserved for 1 h. Still standing was performed for half an hour to separate out a water layer, water washing was performed twice, and a pH value was tested to be 6 to 7. After the washing was completed, the materials were conveyed into a distillation still to remove the solvent, a reduced pressure distillation temperature was finally raised to 140°C to 150°C, and a sample was obtained after the solvent was removed.

### Performance test on prepared bisphenol A-bis(diphenyl phosphate) product

1. Detection method:
   1) Color number determination method: GB-3143;
   2) Acid value determination method: GB-264-1983;
   3) Liquid chromatography method for triphenyl phosphate content detection, specifically characterized in that:
      Chromatographic condition: mobile phase: methanol: water=90:10, chromatographic column: Diamonsil (150 mm×4.6 mm, 5 um), detection wavelength: 254 nm, column temperature: 25°C, and sample volume: 20 ul.
      A triphenyl phosphate standard product (content 99.8%) was weighed to prepare 0.1%, 0.2%, 0.4%, 0.6%, 1.0%, 1.5% and 2.0% solutions, the solutions were diluted by methanol, and a standard curve was made.
      Sample preparation: 0.2 g of the sample was weighed, and was diluted by the mobile phase to 10 ml, dissolution and sample feeding were performed, and the sample volume was 20 ul. The content of triphenyl phosphate in the sample was calculated according to the standard curve.
   4) Liquid chromatography method for isopropylphenyl diphenyl phosphate content detection, specifically characterized in that:
      Chromatographic condition: mobile phase: methanol: water=90:10, chromatographic column: Diamonsil (150 mm×4.6 mm, 5 um), detection wavelength: 254 nm, column temperature: 25°C, and sample volume: 20 ul.
      An isopropylphenyl diphenyl phosphate standard product (content 99.8%) was weighed to prepare 10 ppm, 20 ppm, 40 ppm, 60 ppm, 80 ppm and 100 ppm solutions, the solutions were diluted by methanol, and a standard curve was made.
      Sample preparation: 0.2 g of the sample was weighed, and was diluted by the mobile phase to 10 ml, dissolution and sample feeding were performed, and the sample volume was 20 ul. The content of isopropylphenyl diphenyl phosphate in the sample was calculated according to the standard curve.
2. Sample: products prepared according to Embodiments 1 to 4 and Comparative examples 1 and 3.
3. Experiment results: see Table 1.

**Table 1: Experiment results**

| Item | Embodim ent 1 | Comparati ve example 1 | Comparati ve example 2 | Comparati ve example 3 | Embodim ent 2 | Embodim ent 3 | Embodim ent 4 |
|---|---|---|---|---|---|---|---|
| Color number | 20 | 50 | 40 | 50 | 30 | 30 | 60 |
| Yield | 98% | 94% | 95% | 95.2% | 97.5% | 98.5% | 85% |
| Content of triphenyl phosphate | 0.10% | 0.85% | 0.56% | 0.41% | 0.12% | 0.08% | 2.1% |
| Content of isopropylphe nyl diphenyl phosphate (ppm) | 31 | 5608 | 6101 | 4202 | 42 | 23 | 11008 |

The results in Table 1 show that: through comparison of Embodiments 1 to 3 with Comparative examples 1 to 2 and Embodiment 4, the contents of isopropylphenyl diphenyl phosphate and triphenyl phosphate in the product prepared by the method of the present invention were greatly reduced, the content of the triphenyl phosphate was reduced from 2% or higher to 0.1% or lower of the triphenyl phosphate, the content of isopropylphenyl diphenyl phosphate was reduced to 40 ppm or lower, and a product yield was improved to 97% or higher.

In the intelligent production process, the consumption can be reduced, the operation environment of workers is greatly improved, the labor cost is reduced, in the batch production process, the product quality and yield are stable, and high-end product can be stably produced. In a word, compared with a method in the prior art, the method provided by the present invention has the advantages that the yield is increased, the purity is increased, the impurity content is reduced, and the method is stable.

## Claims

1. A continuous industrial production method of high-purity bisphenol A-bis (diphenyl phosphate), comprising the following processes:
1) dividing bisphenol A into two parts, firstly premixing a part of the bisphenol A with phosphorus oxychloride and a Lewis acid catalyst to form a reaction liquid; adding the reaction liquid into a continuous multistage crosslinked reactor in a continuous feeding manner, and taking a reaction by controlling a reaction temperature at 80°C to 120°C and a reaction pressure at -0.015 to -0.02 MPa; after the reaction is completed, removing excessive phosphorus oxychloride by using a film evaporator through reduced pressure distillation, adding an organic base acid binding agent and the rest of the bisphenol A into a distillation remaining liquid, and taking a reaction for 1.5 to 3 h at a temperature of 115°C to 120°C to obtain an intermediate product reaction liquid; wherein a first part of the bisphenol A firstly participating in the reaction accounts for 70% to 80% of the total amount of the bisphenol A, and the rest of the bisphenol A finally participating in the reaction accounts for 30% to 20% of the total amount of bisphenol A; and wherein a ratio of a weight of the added phosphorus oxychloride to a total weight of the two parts of the added bisphenol A is 2.5-3.5:1.
2) premixing the intermediate product reaction liquid obtained in the step 1) with a phenol initial raw material, then, adding the mixture into a multistage esterification reactor in a continuous feeding manner, and taking an esterification reaction by controlling a reaction temperature at 90 to 150°C and a reaction pressure at -0.015 to 0.02 MPa; continuously supplying consumed phenol in the multistage esterification reaction process so that a reaction progress is accelerated, obtaining a bisphenol A-bis(diphenyl phosphate) crude product after the reaction is completed, and dissolving the crude product into an organic solvent to form a crude product solution; and
3) sequentially performing continuous acid washing, continuous alkali washing and continuous water washing on the crude product solution obtained in the step 2), and performing continuous solvent recovery and filtration to obtain a bisphenol A-bis (diphenyl phosphate) finished product.

2. The continuous industrial production method of high-purity bisphenol A-bis(diphenyl phosphate) according to claim 1, wherein in the step 1), the Lewis acid catalyst is at least one of anhydrous magnesium chloride, anhydrous aluminum chloride, zinc chloride and titanium tetrachloride, and is preferably anhydrous magnesium chloride; and a weight of the added Lewis acid catalyst is 0.1% to 2% of a total weight of two parts of the bisphenol A.

3. The continuous industrial production method of high-purity bisphenol A-bis (diphenyl phosphate) according to claim 1, wherein in the step 1), the organic base acid binding agent is organic amine, and a ratio of a weight of the added organic base acid binding agent to the total weight of the two parts of the added bisphenol A is 1:7-8.

4. The continuous industrial production method of high-purity bisphenol A-bis (diphenyl phosphate) according to claim 3, wherein the organic amine is triethylamine, ammonia gas or N-methylmorpholine, and is preferably triethylamine.

5. The continuous industrial production method of high-purity bisphenol A-bis(diphenyl phosphate) according to claim 1, wherein in the step 1), the continuous multistage crosslinked reactor comprises four stages of reactors, a reaction temperature of a first-stage reactor is 80°C to 85°C, a reaction temperature of a second-stage reactor is 90°C to 100°C, a reaction temperature of a third-stage reactor is 100°C to 110°C, a reaction temperature of a fourth-stage reactor is 110°C to 120°C, and a dwell time of materials in each reactor is 2 to 2.5 h.

6. The continuous industrial production method of high-purity bisphenol A-bis (diphenyl phosphate) according to claim 1, wherein in the step 2), the multistage esterification reactor comprises four stages of reactors connected in series, a reaction temperature of a first-stage reactor is 90°C to 105°C, a reaction temperature of a second-stage reactor is 110°C to 115°C, a reaction temperature of a third-stage reactor is 130°C to 135°C, a reaction temperature of a fourth-stage reactor is 140°C to 145°C, and a dwell time of materials in each reactor is 1.5 to 2 h.

7. The continuous industrial production method of high-purity bisphenol A-bis (diphenyl phosphate) according to claim 1, wherein in the step 2), the multistage esterification reactor comprises four stages of reactors connected in series, consumed phenol is additionally supplied into a second-stage reactor, a third-stage reactor and a fourth-stage reactor, and an amount of the phenol supplied to each stage is 1% to 5% of a weight of the phenol initial raw material.

8. The continuous industrial production method of high-purity bisphenol A-bis (diphenyl phosphate) according to claim 1, wherein a ratio of a total weight of the two parts of the bisphenol A in the step 1) to a weight of the phenol initial raw material in the step 2) is 2-2.5:1.

## Patentansprüche

1. Kontinuierliches industrielles Herstellungsverfahren von hochreinem Bisphenol A-bis(diphenylphosphat), folgende Schritte umfassend:
1) Aufteilen von Bisphenol A in zwei Teile, wobei zunächst ein Teil des Bisphenol A mit Phosphoroxychlorid und einem Lewis-Säure-Katalysator vorgemischt wird, um eine Reaktionsflüssigkeit zu bilden; kontinuierliches Zuführen der Reaktionsflüssigkeit in einen kontinuierlichen mehrstufigen Vernetzungsreaktor und Durchführen einer Reaktion, indem die Reaktionstemperatur auf 80 °C bis 120 °C und der Reaktionsdruck auf -0,015 bis -0,02 MPa geregelt werden; nach Beendigung der Reaktion, Entfernen von überschüssigem Phosphoroxychlorid durch Vakuumdestillation unter Verwendung eines Filmverdampfers, Zugabe eines organischen Basen-Säurebindemittels und des restlichen Bisphenols A zu einer Destillationsrückstandsflüssigkeit, und Durchführen einer Reaktion für 1,5 bis 3 Stunden bei einer Temperatur von 115 °C bis 120 °C, um eine Zwischenprodukt-Reaktionsflüssigkeit zu erhalten; wobei ein erster Teil des Bisphenols A, der zuerst an der Reaktion teilnimmt, 70 % bis 80 % der Gesamtmenge des Bisphenols A ausmacht, und der Rest des Bisphenols A, der am Ende an der Reaktion teilnimmt, 30 % bis 20 % der Gesamtmenge des Bisphenols A ausmacht; und wobei ein Gewichtsverhältnis des zugesetzten Phosphoroxychlorids zum Gesamtgewicht der beiden Teile des zugesetzten Bisphenols A 2,5 bis 3,5:1 beträgt.
2) Vormischen der in Schritt 1) erhaltenen Zwischenprodukt-Reaktionsflüssigkeit mit einem Phenol-Ausgangsrohstoff, anschließendes kontinuierliches Zuführen der Mischung in einen mehrstufigen Veresterungsreaktor und Durchführen einer Veresterungsreaktion unter Steuerung einer Reaktionstemperatur von 90 bis 150 °C und eines Reaktionsdrucks von -0,015 bis 0,02 MPa; kontinuierliches Zuführen von verbrauchtem Phenol in den mehrstufigen Veresterungsreaktionsprozess, um den Reaktionsfortschritt zu beschleunigen, Erhalten eines Bisphenol A-bis(diphenylphosphat)-Rohprodukts nach Beendigung der Reaktion, und Auflösen des Rohprodukts in einem organischen Lösungsmittel, um eine Rohproduktlösung zu bilden; und
3) aufeinanderfolgendes Durchführen einer kontinuierlichen Säurewäsche, einer kontinuierlichen Alkaliwäsche und einer kontinuierlichen Wasserwäsche an der in Schritt 2) erhaltenen Rohproduktlösung, und Durchführen einer kontinuierlichen Lösungsmittelrückgewinnung und Filtration, um ein Bisphenol A-bis(diphenylphosphat)-Endprodukt zu erhalten.

2. Kontinuierliches industrielles Herstellungsverfahren von hochreinem Bisphenol A-bis(diphenylphosphat) gemäß Anspruch 1, wobei in Schritt 1) der Lewis-Säure-Katalysator mindestens einer von wasserfreiem Magnesiumchlorid, wasserfreiem Aluminiumchlorid, Zinkchlorid und Titantetrachlorid ist, vorzugsweise wasserfreies Magnesiumchlorid; und das Gewicht des zugesetzten Lewis-Säure-Katalysators 0,1 % bis 2 % des Gesamtgewichts der beiden Teile des Bisphenol A beträgt.

3. Kontinuierliches industrielles Herstellungsverfahren von hochreinem Bisphenol A-bis(diphenylphosphat) gemäß Anspruch 1, wobei in Schritt 1) das organische Basen-Säurebindemittel ein organisches Amin ist und das Verhältnis des Gewichts des zugesetzten organischen Basen-Säurebindemittels zum Gesamtgewicht der beiden Teile des zugesetzten Bisphenols A 1:7-8 beträgt.

4. Kontinuierliches industrielles Herstellungsverfahren von hochreinem Bisphenol A-bis(diphenylphosphat) gemäß Anspruch 3, wobei das organische Amin Triethylamin, Ammoniakgas oder N-Methylmorpholin ist, vorzugsweise Triethylamin.

5. Kontinuierliches industrielles Herstellungsverfahren von hochreinem Bisphenol A-bis(diphenylphosphat) gemäß Anspruch 1, wobei in Schritt 1) der kontinuierliche mehrstufige vernetzte Reaktor vier Reaktorstufen umfasst, die Reaktionstemperatur eines Reaktors der ersten Stufe 80 °C bis 85 °C beträgt, die Reaktionstemperatur eines Reaktors der zweiten Stufe 90 °C bis 100 °C beträgt, die Reaktionstemperatur eines Reaktors der dritten Stufe 100 °C bis 110 °C beträgt, die Reaktionstemperatur eines Reaktors der vierten Stufe 110 °C bis 120 °C beträgt und die Verweilzeit der Materialien in jedem Reaktor 2 bis 2,5 Stunden beträgt.

6. Kontinuierliches industrielles Herstellungsverfahren von hochreinem Bisphenol A-bis(diphenylphosphat) gemäß Anspruch 1, wobei in Schritt 2) der mehrstufige Veresterungsreaktor vier in Reihe geschaltete Reaktorstufen umfasst, die Reaktionstemperatur eines Reaktors der ersten Stufe 90 °C bis 105 °C beträgt, die Reaktionstemperatur eines Reaktors der zweiten Stufe 110 °C bis 115 °C beträgt, die Reaktionstemperatur eines Reaktors der dritten Stufe 130 °C bis 135 °C beträgt, die Reaktionstemperatur eines Reaktors der vierten Stufe 140 °C bis 145 °C beträgt und die Verweilzeit der Materialien in jedem Reaktor 1,5 bis 2 Stunden beträgt.

7. Kontinuierliches industrielles Herstellungsverfahren von hochreinem Bisphenol A-bis(diphenylphosphat) gemäß Anspruch 1, wobei in Schritt 2) der mehrstufige Veresterungsreaktor vier in Reihe geschaltete Reaktorstufen umfasst, verbrauchtes Phenol zusätzlich in einen Reaktor der zweiten Stufe, einen Reaktor der dritten Stufe und einen Reaktor der vierten Stufe zugeführt wird und die jedem Reaktor zugeführte Phenolmenge 1 % bis 5 % des Gewichts des Phenol-Ausgangsstoffs beträgt.

8. Kontinuierliches industrielles Herstellungsverfahren von hochreinem Bisphenol A-bis(diphenylphosphat) nach Anspruch 1, wobei das Verhältnis des Gesamtgewichts der beiden Bisphenol A-Anteile in Schritt 1) zum Gewicht des Phenol-Ausgangsstoffs in Schritt 2) 2-2,5:1 beträgt.

## Revendications

1. Procédé de production industrielle en continu de bisphénol A-bis (diphénylphosphate) de haute pureté, comprenant les processus suivants : 1) diviser le bisphénol A en deux parties, tout d'abord prémélanger une partie du bisphénol A avec de l'oxychlorure de phosphore et un catalyseur acide de Lewis pour former un liquide de réaction ; ajouter le liquide de réaction dans un réacteur réticulé à plusieurs étages continu d'une manière continue, et prendre une réaction en contrôlant une température de réaction à 80°C à 120°C et une pression de réaction à -0,015 à -0,02 MPa ; une fois la réaction terminée, éliminer l'oxychlorure de phosphore excessif en utilisant un évaporateur à film par distillation à pression réduite, ajouter un agent de liaison acide de base organique et le reste du bisphénol A dans un liquide restant de distillation, et prendre une réaction pendant 1,5 à 3 h à une température de 115°C à 120°C pour obtenir un liquide de réaction de produit intermédiaire ; dans lequel une première partie du bisphénol A participant d'abord à la réaction représente 70 % à 80 % de la quantité totale du bisphénol A, et le reste du bisphénol A participant finalement à la réaction représente 30 % à 20 % de la quantité totale de bisphénol A ; et dans lequel le rapport entre le poids de l'oxychlorure de phosphore ajouté et le poids total des deux parties du bisphénol A ajouté est de 2,5-3,5:1. 2) prémélanger le liquide de réaction du produit intermédiaire obtenu à l'étape 1) avec une matière première initiale de phénol, puis ajouter le mélange dans un réacteur d'estérification à plusieurs étapes de manière continue, et prendre une réaction d'estérification en contrôlant une température de réaction de 90 à 150°C et une pression de réaction de -0,015 à 0,02 MPa ; fournir en continu du phénol consommé dans le processus de réaction d'estérification à plusieurs étapes de manière à accélérer la progression de la réaction, obtenir un produit brut de bisphénol A-bis(diphénylphosphate) une fois la réaction terminée, et dissoudre le produit brut dans un solvant organique pour former une solution de produit brut ; et 3) effectuer séquentiellement un lavage acide continu, un lavage alcalin continu et un lavage à l'eau continu sur la solution de produit brut obtenue à l'étape 2), et effectuer une récupération et une filtration continues du solvant pour obtenir un produit fini de bisphénol A-bis (diphénylphosphate).

2. Procédé de production industrielle en continu de bisphénol A-bis(diphénylphosphate) de haute pureté selon la revendication 1, dans lequel dans l'étape 1), le catalyseur acide de Lewis est au moins l'un parmi le chlorure de magnésium anhydre, le chlorure d'aluminium anhydre, le chlorure de zinc et le tétrachlorure de titane, et est de préférence le chlorure de magnésium anhydre ; et un poids du catalyseur acide de Lewis ajouté
représente de 0,1 % à 2 % du poids total de deux parties du bisphénol A.

3. Procédé de production industrielle en continu de bisphénol A-bis (diphénylphosphate) de haute pureté selon la revendication 1, dans lequel dans l'étape 1), l'agent de liaison acide de base organique est une amine organique, et le rapport entre le poids de l'agent de liaison acide de base organique ajouté et le poids total des deux parties du bisphénol A ajouté est de 1:7-8.

4. Procédé de production industrielle en continu de bisphénol A-bis (diphénylphosphate) de haute pureté selon la revendication 3, dans lequel l'amine organique est la triéthylamine, l'ammoniac gazeux ou la N-méthylmorpholine, et est de préférence la triéthylamine.

5. Procédé de production industrielle continue de bisphénol A-bis(diphénylphosphate) de haute pureté selon la revendication 1, dans lequel dans l'étape 1), le réacteur réticulé à plusieurs étages continu comprend quatre étages de réacteurs, une température de réaction d'un réacteur de premier étage est de 80°C à 85°C, une température de réaction d'un réacteur de deuxième étage est de 90°C à 100°C, une température de réaction d'un réacteur de troisième étage est de 100°C à 110°C, une température de réaction d'un réacteur de quatrième étage est de 110°C à 120°C, et un temps de séjour des matériaux dans chaque réacteur est de 2 à 2,5 h.

6. Procédé de production industrielle continue de bisphénol A-bis (diphénylphosphate) de haute pureté selon la revendication 1, dans lequel dans l'étape 2), le réacteur d'estérification à plusieurs étages comprend quatre étages de réacteurs connectés en série, une température de réaction d'un réacteur de premier étage est de 90°C à 105°C, une température de réaction d'un réacteur de deuxième étage est de 110°C à 115°C, une température de réaction d'un réacteur de troisième étage est de 130°C à 135°C, une température de réaction d'un réacteur de quatrième étage est de 140°C à 145°C et un temps de séjour des matériaux dans chaque réacteur est de 1,5 à 2 h.

7. Procédé de production industrielle en continu de bisphénol A-bis (diphénylphosphate) de haute pureté selon la revendication 1, dans lequel dans l'étape 2), le réacteur d'estérification à plusieurs étages comprend quatre étages de réacteurs connectés en série, le phénol consommé est en outre fourni dans un réacteur de deuxième étage, un réacteur de troisième étage et un réacteur de quatrième étage, et une quantité du phénol fournie à chaque étage est de 1 % à 5 % d'un poids de la matière première initiale de phénol.

8. Procédé de production industrielle en continu de bisphénol A-bis (diphénylphosphate) de haute pureté selon la revendication 1, dans lequel le rapport entre le poids total des deux parties du bisphénol A dans l'étape 1) et le poids de la matière première initiale de phénol dans l'étape 2) est de 2-2,5:1.
